# EUROPÄISCHE PATENTSCHRIFT

(11) **EP 1 357 255 B1**
(45) Veröffentlichungstag und Bekanntmachung des Hinweises auf die Patenterteilung: **11.04.2007**
(21) Anmeldenummer: 02009563.4
(22) Anmeldetag: 26.04.2002
(51) Int. Cl.: F01D 17/16, F02C 6/12

(54) **Turbokompressor mit verstellbaren Leitschaufeln**
Variable nozzle turbocharger
Turbocompresseur avec distributeur à géométrie variable

(43) Veröffentlichungstag der Anmeldung: 29.10.2003
(60) Teilanmeldung: 04029659.2
(73) Patentinhaber: BorgWarner Inc., Auburn Hills, MI 48326-2872 (US)
(72) Erfinder: Lingenauber, Robert, 67227 Frankenthal (DE); Josef Hemer, 67550 Worms (DE)
(74) Vertreter: Patentanwälte Westphal, Mussgnug & Partner

(56) Entgegenhaltungen:
- EP-A- 0 226 444
- EP-A- 1 120 547
- DE-A- 10 050 157
- FR-A- 1 313 782
- US-A- 4 179 247
- US-A- 4 659 295
- US-A- 4 696 620

## Beschreibung

Die Erfindung betrifft einen Turbolader mit variabler Turbinengeometrie gemäß dem Oberbegriff des Anspruchs 1.

Bei Turbomaschinen, in denen die Turbine zum Antrieb eines Kompressors oder Laders dient, ist es oft von Vorteil, den Abgasstrom in die Turbine zu regeln, um den Wirkungsgrad, das Ansprechverhalten oder den Betriebsbereich zu verbessern. Dies kann insbesonders durch eine variable Geometrie der zum Turbinenrad führenden Düsenkanäle erreicht werden. Diese Düsenkanäle mit variabler Geometrie können über einen Ring von Leitschaufeln gebildet werden, die drehbar gelagert sind, um auf diesem Weg die zwischen ihnen liegenden Kanäle unterschiedlich einstellen zu können. Die Ausführung der in Verbindung mit den schwenkbaren Schaufeln verwendeten Verstelleinrichtung ist entscheidend, um ein Verklemmen der Verstelleinrichtung oder der Schaufeln zu verhindern.

Die Patente US 2,860,827 und US 4,179,247 zeigen Vorschläge zur Verhinderung einer Blockierung der Verstelleinrichtung für die schwenkbaren Schaufeln. Keiner der beiden Konstruktionsentwürfe ist jedoch für solche Temperaturschwankungen im Turbinengehäuse oder der Komponenten der Verstelleinrichtung geeignet, wie sie in modernen Verbrennungskraftmaschinen auftreten.

Die US 2,860,270 beschreibt ebenfalls einen Turbolader mit variabler Turbinengeometrie. Die Strömungskanäle eines ringförmigen, radial von Auspuffgasen durchströmten Spalts, der zwischen einem Gehäuseteil des Turbinengehäuses und einem Düsenring angeordnet ist, werden durch den Zwischenraum zwischen Leitschaufeln gebildet. Die Leitschaufeln sind kreisförmig an dem Düsenring schwenkbar gelagert, und zwar derart, dass die Strömungskanäle maximal geöffnet sind, wenn die Leitschaufeln radial stehen, und maximal geschlossen sind, wenn die Düsenschaufeln im wesentlichen tangential ausgerichtet sind.

Die Leitschaufeln sind auf dem Düsenring mittels Lagerzapfen befestigt, welche den Düsenring durchsetzen, und die an ihren gegenüberliegenden Enden jeweils einen Betätigungsarm tragen.

In derselben axialen Ebene der kreisförmig angeordneten Betätigungsarme ist ein weiterer Ring, der sogenannte Verstellring, vorgesehen, der zur gleichzeitigen Betätigung aller Betätigungsarme dient. Hierfür weist der Verstellring an seinem inneren Rand Eingriffsmittel auf, die mit entsprechenden Eingriffsmitteln an jedem der Betätigungsarme derart zusammenwirken, dass bei Verdrehung des Verstellrings in Bezug auf den Düsenring alle Betätigungsarme, und mit ihnen die Leitschaufeln, gleichzeitig verschwenkt werden.

Der Verstellring trägt ein Betätigungsmittel, welches das Turbinengehäuse durchsetzt, um den Verstellring von außerhalb des Gehäuses steuern zu können.

Der Verstellring ist von zumindest drei, mit einer Nut versehenen Rollen getragen, in denen der Innenrand des Verstellrings sowohl axial als auch radial geführt ist.

Die Rollen können frei um die Lagerzapfen herum rotieren, wobei die Lagerzapfen im selben Teil der Turbinengehäuses arigeordnet sind wie die zuvor beschriebenen Betätigungsmittel. Die Lagerzapfen durchsetzen in axialer Richtung die Wandung des Turbinengehäuses und sind frei drehbar mittels Sprengringen zu beiden Seiten dieser Wandung axial fixiert.

Diese Anordnung funktioniert in befriedigender Weise, solange keine allzu grossen Temperaturschwankungen auftreten. Moderne Turbolader sind jedoch extrem starken Temperaturschwankungen ausgesetzt, so erreichen Turbinenteile und benachbarte Teile Temperaturen von bis zu 900°C.

Diese Temperaturschwankungen, zusammen mit den extrem hohen Drehzahlen des Turbinenrades und des Kompressorrades, erzeugen extreme Belastungen für alle Komponenten, und führen zu einem hohen Verschleiß bis hin zu einem Funktionsausfall des gesamten Turboladers.

In diesem Zusammenhang ist es wichtig, dass die geometrische Zuordnung aller zusammenwirkenden Teile, wie Düsenring, Verstellring, Rollen, Lagerzapfen, Betätigungsarme etc. soweit konstant gehalten werden kann, dass die Verstellung der Leitschaufeln unter allen Temperatur- und Betriebsbedingungen stets gegeben ist.

Der Turbolader nach US 2,860,827 ist nicht optimal im obigen Sinn ausgelegt, um die Beibehaltung der Geometrie der beschriebenen Teile bei grossen Temperaturschwankungen zu gewährleisten. Dies gilt auch für den Turbolader gemäß der. US 4,179,247 da der Lagermechanismus für den Verstellring ein doppeltes Kugellager aufweist. Derartige Kugellager sind jedoch unter den genannten Bedingungen äusserst kritisch und sind über dies sehr kompliziert beim Zusammenbau.

Es wurden weitere Anstrengungen unternommen um die beschriebenen Probelme zu lösen. Beispielsweise wird auf den Turbolader entsprechend der EP 0 226 444 B1 verwiesen. Dieses Patent beschreibt einen Lagermechanismus für den Verstellring, besteht aus Stiften und Rollen mit Umfangsnuten, welche den Verstellring in ähnlicher Weise tragen und führen, wie dies aus der US 2,860,827 bekannt ist.

Gemäß der EP 0 226 444 B1 sind die Lagerzapfen jedoch nicht im Gehäuse axial fixiert, sondern sie erstrecken sich frei beweglich, von Bohrungen im Gehäuse an einer Seite zu Bohrungen im Düsenring an der anderen Seite, wobei die genuteten Rollen frei auf den Lagerzapfen rotieren können.

Da die einen Enden der Lagerzapfen in den Düsenring hineingreifen, soll dies eine exakte koaxiale Ausrichtung von Düsenring und Verstellring sicherstellen, auch unter extremen Temperaturbedingungen. In der Praxis haben sich jedoch zwei Probleme gezeigt.

Zum einen gestaltet sich der Zusammenbau des Verstellmechanismus kompliziert, da er die Einführung der Lagerzapfen in die Bohrungen zuerst des Düsenrings oder des Gehäuses, das anschließende Aufsetzen der Rollen auf die Lagerzapfen und des Verstellrings auf die Rollen und schließlich das Einführen der freien Enden der Lagerzapfen in die gegenüberliegenden Bohrungen erfordert. Ohne eine exakte, achsparallele Ausrichtung dieser freien Enden der Lagerzapfen auf die Bohrung im zweiten Element gelingt der Zusammenbau nur mühsam.

Da die Ausrichtung der Bohrung zwischen Düsenring und Gehäuse niemals perfekt ist, und überdies wegen dem notwendigen Spiel zwischen Lagerzapfen und Bohrung die Lagerzapfen vor der Einführung in das zweite Element nicht exakt achsparallel ausgerichtet sind, erfordert die Montage eine große Geschicklichkeit.

Zum anderen sind die Bohrungen im Gehäuse und diejenigen im Düsenring unterschiedlich thermischen Dilatationen ausgesetzt, so dass im Betrieb die Lagerzapfen von ihren exakten achsparallelen Ausrichtungen weg geneigt werden. Dis beeinträchtigt das Zusammenspiel der Teile.

Weiterhin ist von Nachteil, dass bedingt durch die 3-Punkt-Lagerung und das notwendige Bewegungsspiel des Verstellringes nicht immer eine ausreichend genaue konzentrische Anordnung zum Teilkreis der Schaufelachsen erreicht wird. Dieser Effekt wird während der Verstellung noch verstärkt, da durch den Verstellhebel innen der Verstellring je nach Stellrichtung aus seiner Mittellage heraus geschoben wird und dieser sich dann nur über zwei Rollen abstützt und somit das tatsächliche Radialspiel des Verstellringes gegenüber dem Idealfall der 3-Punkt-Lagerung vergrößert. Die außermittige Lage des Verstellringes bewirkt, dass die Winkel der einzelnen Leitschaufeln untereinander verschieden sind, was sich negativ auf die Thermodynamik und das Regelverhalten auswirkt und eine größere Hysterese verursacht. Als weiterer Nachteil ist die Gleitreibung zwischen Stift und Rollen einerseits, sowie der Stirnflächen der Rollen zum Schaufellagerring und Gehäuse hin andererseits zu erwähnen. Dies führt zu Verschleiß und erhöhtem Stellkraftaufwand.

Der Erfindung liegt deshalb die Aufgabe zugrunde, einen Abgasturbolader der Eingangs genannten Art zur Verfügung zu stellen, der die beschriebenen Nachteile nicht mehr aufweist. Insbesondere sollte ein Abgasturbolader mit variabler Turbinengeometrie geschaffen werden, der unter allen Betriebsbedingungen eine zuverlässige Betätigung der Leitschaufeln ermöglicht.

Gelöst wird diese Problem durch eine Abgasturbolader, der die Merkmale der Anspruchs 1 aufweist.

Vorteilhafte Ausführungsvarianten sind durch die Merkmale der Unteransprüche beschrieben.

Die Erfindung basiert auf der Idee, den Verstellring in radialer Richtung unmittelbar an den Schaufelhebeln abzustützen und damit auf eine seperate Lagerung in Form vom Stiften, Rollen, Wälzlagern oder dergleichen vollständig zu verzichten. Hierdurch ergibt sich ein erheblich vereinfachter Aufbau der Gesamtkonstruktion des Leitapparates, der nicht nur zu reduzierten Kosten in der Herstellung, sondern auch zu einer erhöhten Funktionssicherheit der gesamten Verstelleinrichtung führt. Weiterhin ergibt sich auf Grund der verringerten Anzahl von Einzelteilen eine erhöhte Zuverlässigkeit des Turboladers sowie ein - wenn auch vergleichsweise kleines - Einsparungspotential beim Kraftstoffverbrauch infolge des verringerten Gesamtgewichts. Auch ist die Reibung zwischen den einzelnen Bauteilen reduziert, so dass sich nicht nur der Verschleiß, sondern auch Kraftaufwand für die Verstellvorgänge reduzieren lässt. Daneben wird das Regelverhalten des Turboladers verbessert.

In der konkreten Umsetzung dieser Idee ergeben sich bevorzugte Ausführungsvarianten, die jeweils spezifische zusätzliche Vorteile aufweisen.

Bevorzugt weist der Verstellring radiale Anlageflächen auf, die mit korrespondierenden radialen Stützflächen der Schaufelhebel zusammen wirken. Prinzipiell kann die bisherige Gestaltung des Verstellrings beibehalten werden, wobei bestimmte Abschnitte, wie beispielsweise ohnehin vorhandene Ausnehmungen oder Umfangsabschnitte, als radiale Anlageflächen dienen. Dies können beispielsweise kreisbogensegmentförmige Abschnitte der Ausnehmungen sein, in die die Schaufelhebel mit Ihren Schaufelköpfen im Eingriff sind. Bislang dienten diese Abschnitte der Ausnehmungen lediglich als tangentiale Anlageflächen für die Hebelköpfe, über die die Bewegung des Verstellrings auf die Schaufelhebel übertragen wurde. Nunmehr dienen diese Abschnitte zusätzlich auch der radialen Abstützung des Verstellrings.

Weiterhin können - wie bisher - bestimmte Abschnitte am Innenumfang des Verstellrings als radiale Anlageflächen dienen. Im Unterschied zu den bisherigen Konzepten ruhen diese Anlageflächen nicht mehr auf separat abgestützten Rollen oder Stiften, sondern unmittelbar auf radialen Stützflächen der Schaufelhebel selbst.

Bei den vorstehend beschriebenen Ausführungsformen können deshalb die bisherigen Verstellringe prinzipiell weiter verwendet werden. Dies reduziert die Teilevielfalt bei der Lagerhaltung, da die Verstellringe weiterhin auch bei den bisherigen Abgasturboladern verwendet werden können.

Weitere vorteilhafte Varianten beziehen sich auf die Konzeption der radialen Stützflächen an den Schaufelhebeln.

Eine erste Gruppe von Varianten weist radiale Stützflächen im Bereich der Hebelköpfe auf, die dort als Umfangabschnitte ausgebildet sind. Eine besonders gute Führung mit geringem Spiel erlauben Hebelköpfe, die kreissegmentförmig gestaltet sind.

Hierdurch wird im Verbindung mit einem im wesentlichen halbkreisförimigen Abschnitt der korrespondierenden Ausnehmung im Verstellring eine großflächige Anlage des Hebelkopf erreicht. Diese großflächige Anlage ist im gesamten Verstellbereich gegeben, und zwar nicht nur in den jeweiligen Endstellungen, sondern insbesondere auch in mittleren Winkelstellungen.

Eine ähnlich gute Führung wird auch dann erreicht, wenn die Hebelköpfe zwar abgeflacht ausgeführt sind, im Bereich der Abflachung jedoch mit einer zusätzlichen radialen Stützfläche in Form eines Ansatzes ausgestattet sind. Gegenüber der vorstehend beschriebenen Ausführung ergeben sich geringere Betätigungskräfte; da die Reibkräfte zwischen den Hebelköpfen und dem Verstellring geringer sind. Speziell im mittleren Verstellbereich ist zwar lediglich eine eher punktuelle Abstützung zwischen den Hebelkopf und der jeweiligen Ausnehmung gegeben, jedoch wirkt diese sich nicht negativ auf die Genauigkeit der Radialführung aus.

Eine weitere Möglichkeit zur Realisierung von radialen Stützflächen besteht darin, diese nicht im Bereich der Hebelköpfe, sondern an den Hebelarmen vorzusehen. In diesen Fällen erfolgt die Abstützung über Abschnitte am inneren Umfang des Verstellrings. Die radialen Stützflächen können beispielsweise kreisbogensegmentförmige Konturabschnitte sein, die unmittelbar an den Hebelarmen angeformt sind. Die Hebelarme können somit weiterhin beispielsweise als Feinstanzteil, und damit kostengünstig, hergestellt werden.

Speziell für den Nutzfahrzeugbereich sind Varianten vorgesehen, bei denen die radialen Stützflächen als axiale Ansätze an den Hebelarmen vorgesehen sind. Die Ansätze weisen in radialer Richtung wiederrum die kreisbogenförmigen Konturabschnitte auf, die zur radialen Abstützung des Verstellrings dienen.

Bevorzugt werden an den Schaufelhebeln zusätzlich axiale Führungsflächen für den Verstellring vorgesehen. Diese können beispielsweise an den Schaufelarmen in radialer Verlängerung zu den radialen Stützflächen angeformt sein. Damit kann die Funktion der axialen Führung des Verstellrings mit derjenigen der radialen Abstützung auf einfache Weise ideal kombiniert werden. Hierfür sind jedoch etwas aufwändigere Fertigungsverfahren, wie beispielsweise Feinguss- , Sinter- oder MIM-Verfahren erforderlich, um die in axialer Richtung gestalteten Konturverläufe umsetzten zu können.

Alternativ ist es auch denkbar, die axialen Führungsflächen als seperate Bauteile vorzufertigen und diese nachträglich an den betreffenden Schaufelhebel, beispielsweise durch Schweißen, Nieten oder Klemmen, zu befestigen. In diesem Falle können Schaufelhebel und Führungsflächen weiterhin als Stanzteile aufgeführt sein, wodurch sich der Gesamtaufwand gegenüber der vorstehend näher beschriebenen Fertigungsverfahren verringern lässt.

Die Konzeption von axialen Führungsflächen als Bestandteil der Schaufelhebel eröffnet die Möglichkeit, den Verstellring unverlierbar zwischen den Schaufelhebeln zu fixieren, sofern zumindest einige der Schaufelhebel so angeordnet werden, dass axiale Führungsflächen an beiden Seiten des Verstellrings vorhanden sind. Auf diese Weise kann der gesamte Leitapperat einschließlich des Verstellrings als eigenständige Baugruppe moniert werden.

Der Erfindung wird anschließend anhand der in den Figuren schematisch dargestellten Ausführungsbeispiele näher erläutert. Es zeigen
- Fig. 1: Leitapparat als vormontierte Baugruppe, Darstellung links: Ansicht von rechts, mittlere Darstellung: Draufsicht, rechte Darstellung: Ansicht von links;
- Fig. 2: Leitschaufel mit Schaufelhebel;
- Fig. 3 bis.9: Schaufelhebel in verschiedenen Ausführungsvarianten, jeweils linke Darstellung: Draufsicht, vergrößert, mittlere Darstellung: Schnitt A-A rechte Darstellung: perspektivische Ansicht;
- Fig. 10: Leitapparat, weitere Ausführungsvariante;
- Fig. 11: Abgasturbolader nach dem Stand der Technik, Axialschnitt.

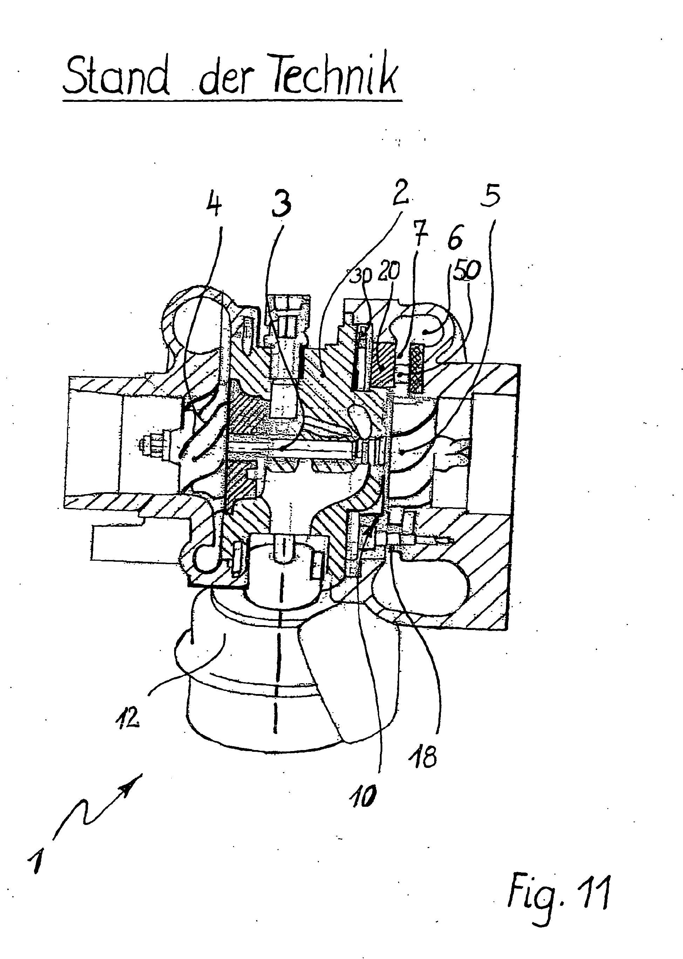

Der grundsätzlich Aufbau eines Abgasturboladers nach dem Stand der Technik ergibt sich aus Fig. 11.

Der Abgasturbolader 1 weist ein Gehäuse 2 auf, in welchem eine Welle 3 drehbar gelagert ist. Die Welle 3 trägt an einem Ende ein Verdichterrad 4 und an dem gegenüberliegendem Ende ein Turbinenrad 5. Innerhalb eines Turbinengehäuses 8 ist auf der Seite des Turbinenrads 5 eine Volute 6 gebildet, die in radialer Richtung in einen Ringkanal 7 übergeht. Im Ringkanal 7 sind verstellbare Leitschaufeln 50 angeordnet.

Die Leitschaufeln 50 sind an einem Schaufellagerring 20 schwenkbar gelagert und werden über einen Aktuator 12 verstellt, der in hier nicht näher dargestellter Art und Weise auf einen Verstellring 30 einwirkt. Eine Drehbewegung des Verstellrings 30 in Bezug auf den Schaufellagerring 20 wird auf die Leitschaufeln 50 übertragen, die in einem vorgegebenen Schwenkbereich zwischen einer geöffneten und eine geschlossenen Position verstellt werden können.

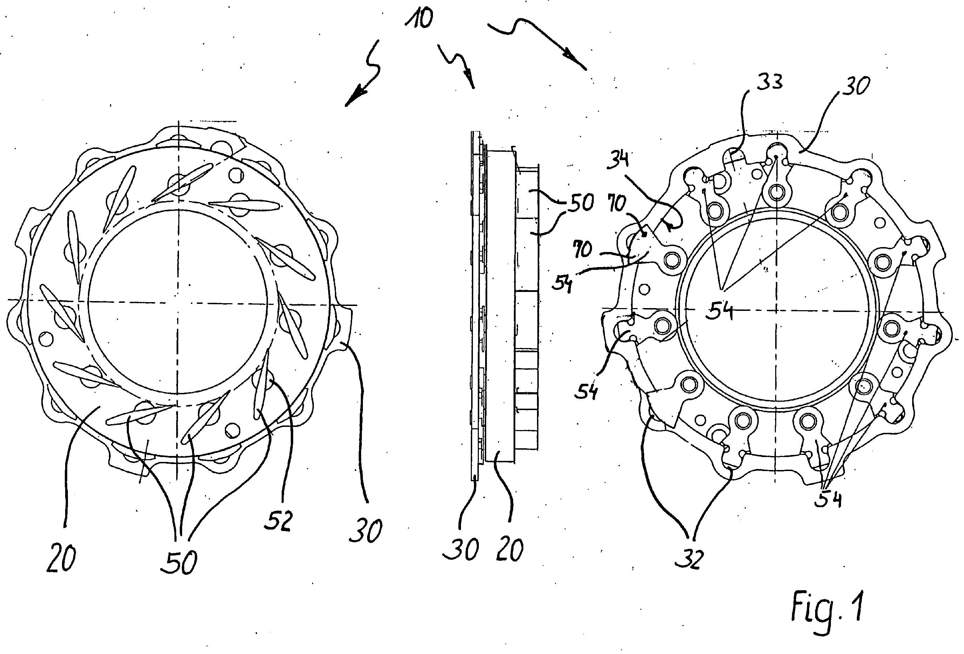

Die Besonderheit der vorliegenden Erfindung liegt in der speziellen Abstützung des Verstellrings 30 in radialer Richtung und wird nachstehend anhand der Figuren 1 bis 10 erläutert.

Die Leitschaufeln 50 eines Leitapparats 10 sind in ringförmiger Anordnung in dem Schaufellagerring 20 schwenkbar gelagert und nehmen in der linken Darstellung gemäß Fig. 1 eine mittlere Winkelstellung ein. Die Lagerung der Leitschaufeln 50 erfolgt durch Schaufelzapfen 52, die den Schaufellagerring 20 axial durchsetzen. Die Leitschaufeln 50 sind hierbei verdrehfest mit den Schaufelzapfen 52 verbunden.

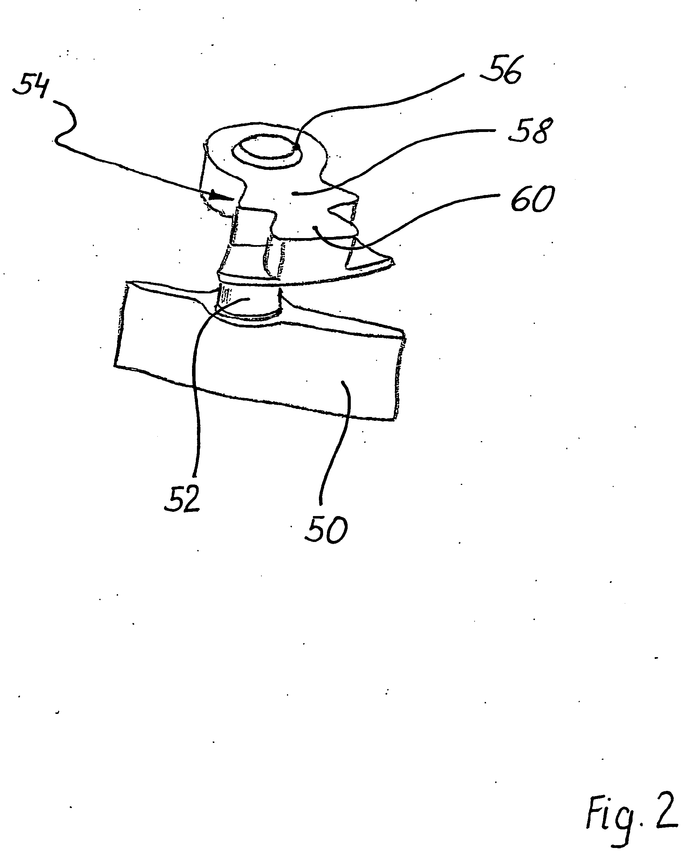

Am gegenüberliegenden Ende der Schaufelzapfen 52 sind Schaufelhebel 54 verdrehfest angebracht, wie sich insbesondere aus Fig. 2 ergibt. Die Schaufelhebel 54 besitzen zu diesem Zweck eine Aufnahmebohrung 56, mit der die Schaufelhebel 54 die Schaufelzapfen 52 aufgeschoben werden können. Die verdrehfeste Fixierung erfolgt in an sich bekannter Weise, beispielsweise durch Anschweißen.

Die Schaufelhebel 54 weisen jeweils eine Hebelarm 58 auf, der radial auswärts gerichtet einen Hebelkopf 60 trägt. Der Hebelkopf 60 dient in der nachstehen näher beschriebenen Art und Weise dazu, die Drehbewegung des Verstellrings 30 auf-die Leitschaufel 50 zu übertragen. Hierzu greift jeder Hebelkopf 60 in eine korrespondierende Ausnehmung 32 des Verstellrings 30 ein und ist darin in tangentialer Richtung weitgehend spielfrei in Kontakt mit dem entsprechenden Abschnitt der Ausnehmung 32. Eine Drehbewegung des Verstellrings 30, die über den Eingriff eines nicht dargestellten Verstellhebels in eine Ausnehmung 33 erzeugt wird, führt zwangsgekoppelt zur einer Verschwenkung der Leitschaufeln 50.

Neben dieser originären Funktion übernehmen die Schaufelhebel 54 erfindungsgemäß zumindest eine weitere Funktion, nämlich diejenigen der Abstützung des Verstellrings 30 in radialer Richtung. Hierzu erhalten bestimmte Abschnitte des Verstellrings 30 in Verbindung mit korrespondierenden Abschnitten des Schaufelhebels 54 die Funktion eines radial wirkenden Lagers und ersetzen damit die bislang übliche seperate Abstützung mittels Zapfen oder Rollen.

Der Verstellring 30 kann beispielsweise im Bereich der Ausnehmungen 32 radial abgestützt werden, wobei als radiale Anlageflächen die kreisbogensegmentförmig gestalteten Abschnitte der Ausnehmungen 33 unmittelbar dienen. Alternativ oder ergänzend hierzu können auch die Umfangsabschnitte 34 herangezogen werden, die sich jeweils am Innenumfang zwischen zwei benachbarten Ausnehmungen 32 befinden. Auf diese Weise können auch herkömmliche Verstellringe ohne besondere Maßnahmen weiter verwendet werden, wobei gegebenenfalls auf die Einhaltung engerer Fertigungstoleranzen an denjenigen Abschnitten zu achten ist, die als radiale Anlageflächen dienen sollen.

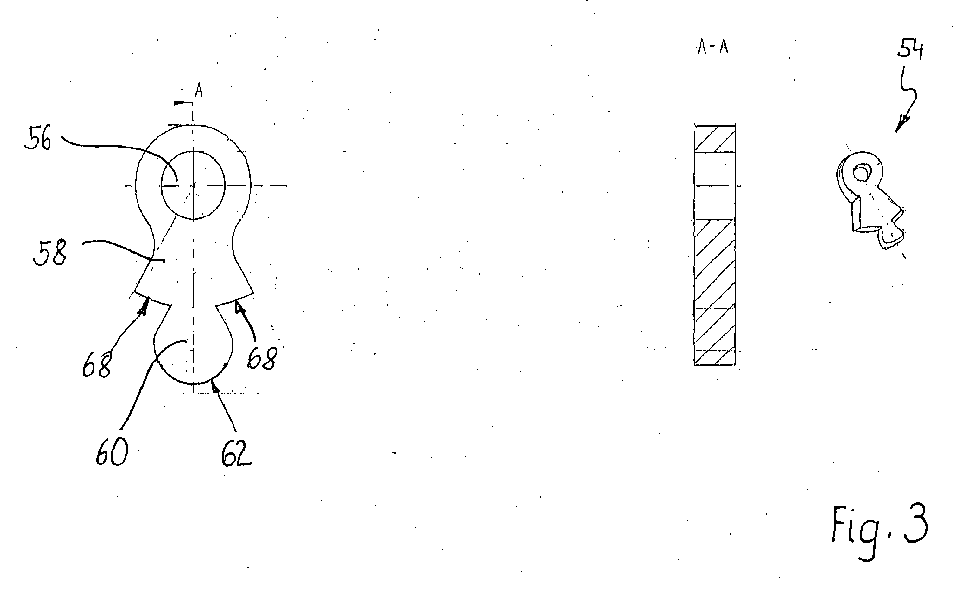

Diese radialen Anlageflächen wirken mit korrespondierenden radialen Stützflächen zusammen, die an den Schaufelhebeln 54 vorgesehen sind. Im Hinblick auf deren Gestaltung kommen verschiedenen Varianten in Betracht, wie sie insbesondere in den Fig. 3 bis 9 dargestellt sind.

Bei der Variante gemäß Fig. 3 ist der Hebelkopf 60 im Wesentlichen als Vollkreis gestaltet, der längs eines Umfangsabschnitts 62 in der korrespondierenden Ausnehmung 32 abgestützt ist. Diese Variante gewährleistet eine gleichmäßige radiale Abstützung, und zwar weitgehend unabhängig von der aktuellen Winkelstellung der Leitschaufel 50.

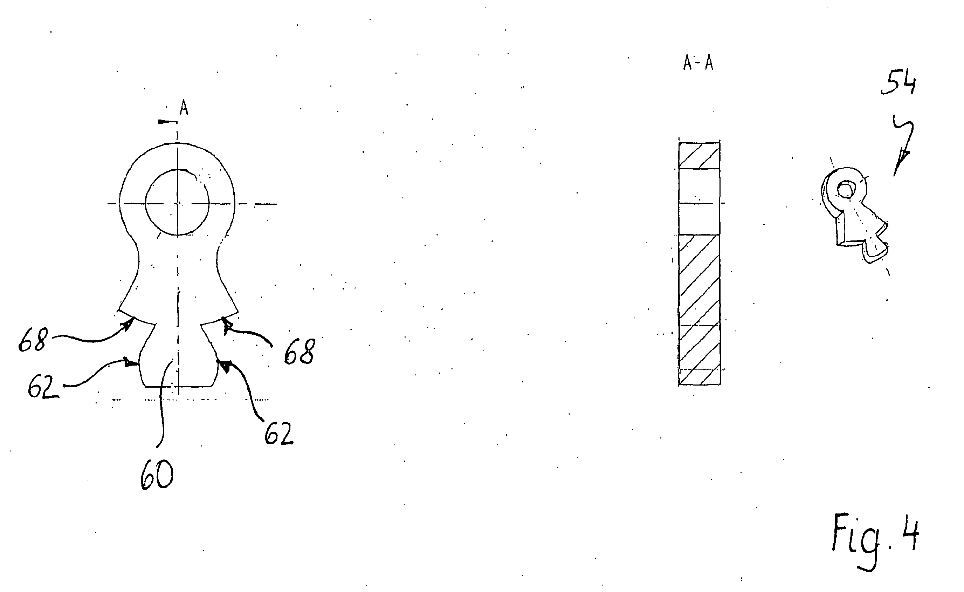

Eine vergleichbare Variante ist in Fig. 4 dargestellt. Der Unterschied zu der vorstehend beschriebenen Variante besteht darin, dass der Hebelkopf 60 abgeflacht verläuft, wodurch die radiale Anlagefläche durch zwei Umfangsabschnitte 62 zu beiden Seiten der Abflachung gebildet wird. Im Vergleich zur Variante gemäß Fig. 3 sind geringere Reibkräfte gegeben, die eine Reduzierung der Betätigungskräfte ermöglichen. Allerdings muss mit einer geringfügigen Verschlechterung der radialen Abstützung gerechnet werden.

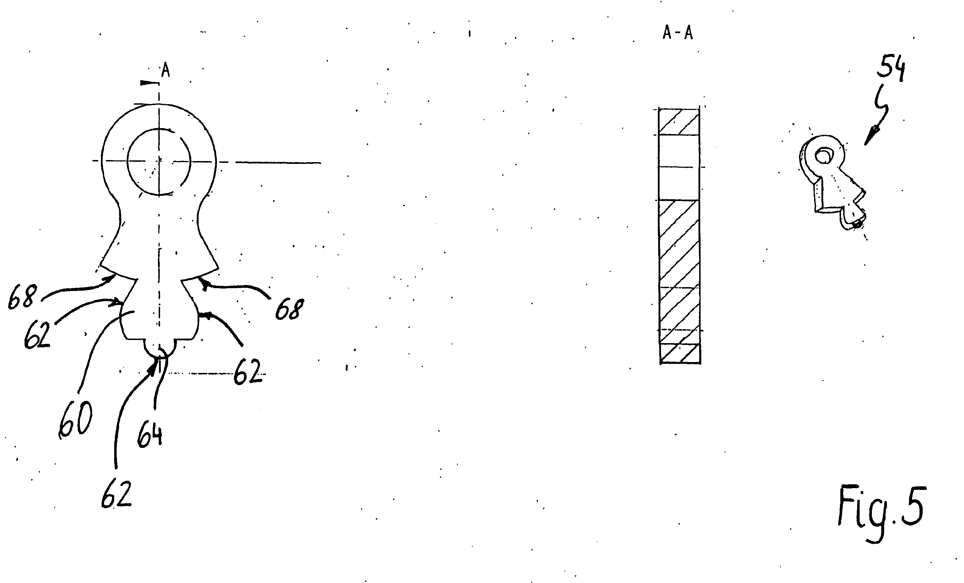

Einen hervorragenden Kompromiss zwischen den beiden oben genannten Varianten stellt die Ausführungsform gemäß Fig. 5 dar. Wiederrum ist der Schaufelkopf 60 in radialer Richtung abgeflacht ausgeführt, jedoch befindet sich in diesem Bereich ein radialer, halbkreisförmiger Ansatz 64. Somit wird gegenüber der Variante nach Fig. 4 eine zusätzliche radiale Stützfläche 62 realisiert, ohne dadurch die Reibungskräfte nennenswert zu erhöhen. Die Lagereigenschaften entsprechen weitgehend derjenigen der Variante nach Fig. 3.

Zusätzlich oder auch alternativ können radiale Stützflächen an den Hebelarmen 58 in Form vom Konturabschnitten 68 angebracht werden. Übereinstimmend bei den Ausführungsbeispielen gemäß Fig. 3 bis Fig. 5 ist die Anbringung von zwei kreisbogensegmentförmigen Konturabschnitten 68, die am Übergangsbereich zu den Hebelköpfen 60 angeformt sind. Die Konturabschnitte 68 dienen speziell zur radialen Abstützung in Winkelbereichen ausserhalb der mittleren Winkelposition, in dem sie sich an die Umfangsabschnitte 34 des Verstellrings 30 anlegen und damit die radiale Lagerung übernehmen. Die Konturabschnitte 68 können auch speziell derart ausgelegt sein, dass unabhängig von der Winkelpositions stets eine radiale Anlage an den Umfangsabschnitten 34 erreicht wird.

Die Schaufelhebel 54 der Ausführungsbeispiele nach Fig. 3 bis 5 lassen sich weiterhin als preiswerte Stanzteile herstellen, wobei bestimmte Umfangs- oder Konturabschnitte als Funktionsflächen für eine radiale Abstützung sorgfältig ausgeführt sein müssen. Durch eine entsprechende Form - bzw. Konturgebung - wird sichergestellt, dass sich der Verstellring 30 über die Schaufelhebel 54 abwälzt. Diese Wälzbewegung erzeugt eine besonders geringe Reibung.

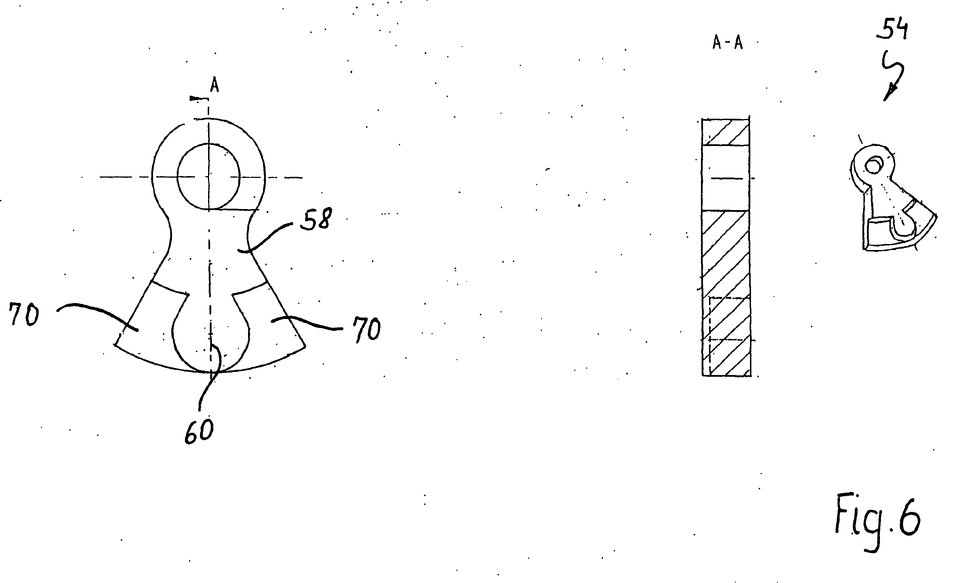

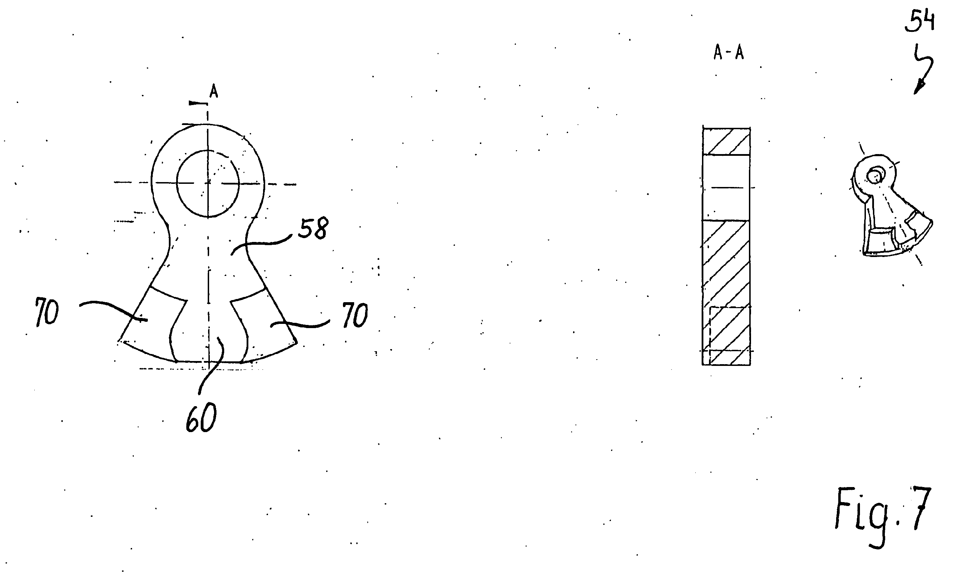

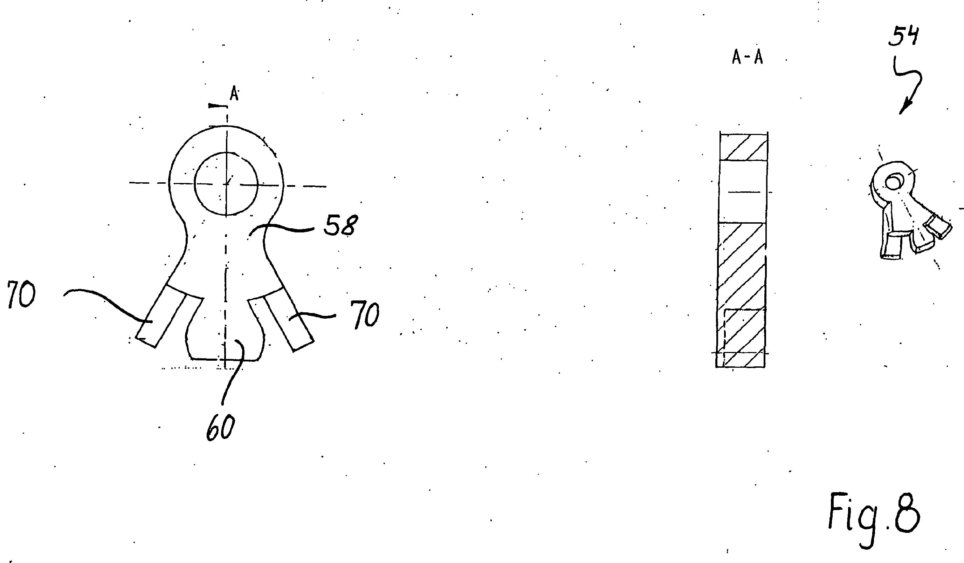

In den Fig. 6 bis 9 dargestellten Schaufelhebel 54 besitzen eine Grundform, die mit denjenigen der Fig. 3 bzw. Fig. 4 übereinstimmt, so dass die Funktion der radialen Abstützung unverändert erhalten bleibt. Zusätzlich weisen sie jedoch axiale Führungsflächen 70 auf, die der axialen Führung des Verstellrings 30 dienen. Bei den dargestellten Ausführungsbeispielen sind die axialen Führungsflächen 70 in radialer Verlängerung der Hebelarme 58 angeformt. Hinsichtlich ihrer radialen Erstreckung ist lediglich die Bedingung einzuhalten, dass eine Mindestüberdeckung mit dem Verstellring 30 in radialer Richtung soweit erfolgen muss, dass eine sichere Führung des Verstellrings 30 gewährleistet ist.

Im Falle des Ausführungsbeispieles nach Fig. 6 sind die axialen Führungsflächen 70 radial bis auf die Höhe des Hebelkopfs 60 geführt.

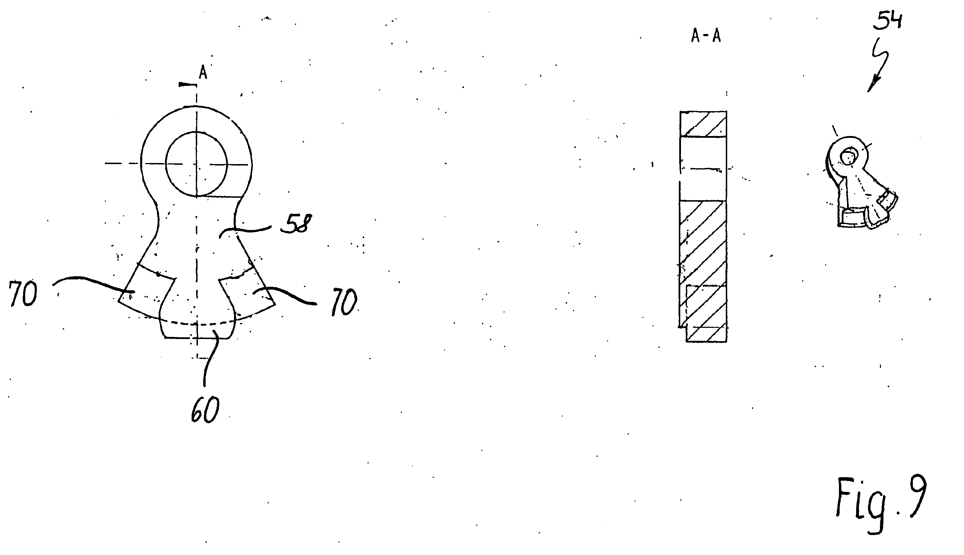

Nach dem gleichen Prinzip ist das Ausführungsbeispiel gemäß Fig. 7 gestaltet, wobei eine kürzere radiale Ausdehnung der axialen Führungsflächen 70 dadurch vorgegeben ist, dass der Hebelkopf 60 in radialer Richtung abgeflacht verläuft.

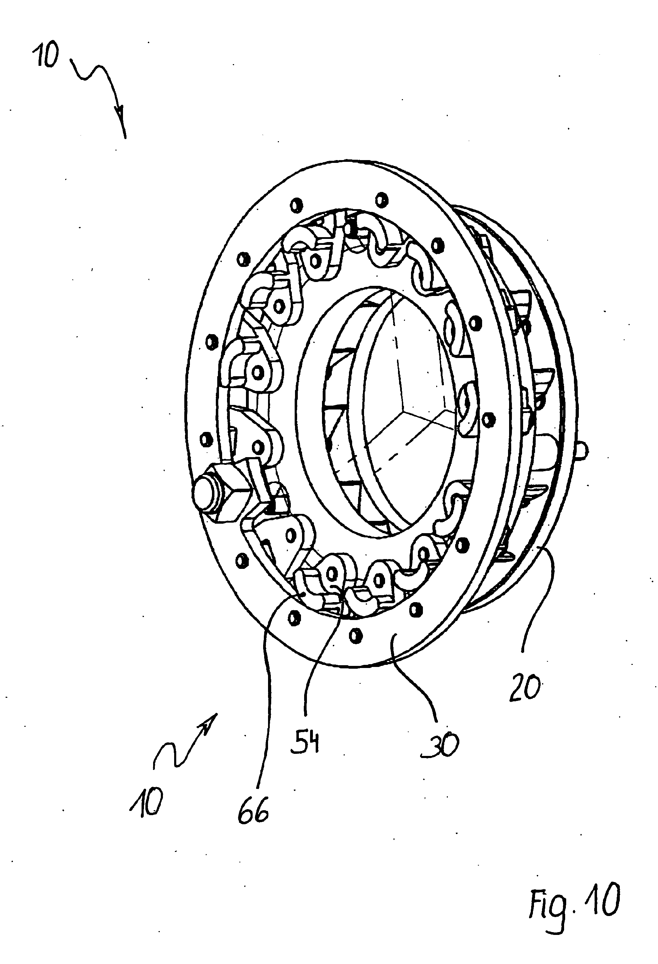

Die Variante nach Fig. 8 unterscheidet sich dahin gehend, dass die beiden axialen Führungsflächen 70 in Umfangsrichtung nicht bis an den Schaufelkopf 60 heran reichen, sondern ein Zwischenraum zwischen den Führungsflächen 70 und dem Hebelkopf 60 verbleibt. Die axialen Führungflächen 70 sind in diesem Beispiel als Führungsarme ausgeführt, die trotz verringerter Fläche eine ausreichende axiale Führung des Verstellrings 30 gewährleisten.

Das in Fig. 9 dargestellte Ausführungsbeispiel weist axiale Führungflächen 70 auf, die in radialer Richtung verkürzt ausgeführt sind. Auch hier ergibt sich eine verringerte Anlagefläche, die jedoch für die sichere axiale Führung des Verstellrings 30 völlig ausreichend ist.

Bei den in den Fig. 6 bis 9 dargestellten Hebelarmen 54 ist somit die Funktion der axialen Führung zusätzlich zur radialen Abstützung integriert. Der Fertigungsaufwand zur Herstellung derartiger Schaufelhebel ist in der Regel zwar höher, jedoch können die sonst üblichen zusätzlichen axialen Führungselemente entfallen.

Ein besonders vorteilhafter Anwendungsfall ist in Fig. 1 dargestellt, bei dem der Verstellring 30 ohne Zusatzelemente verliersicher dadurch gehalten ist, dass Schaufelhebel 54 mit integrierten axialen Führungsflächen 70 so montiert sind, dass die Führungsfunktion zu beiden Seiten gewährleistet ist. Idealerweise sind die Schaufelhebel 54 hinsichtlich der axialen Führungsflächen 70 abwechselnd angeordnet, so dass der Verstellring 30 über dem Umfang verteilt in axialer Richtung gleichmäßig geführt ist.

Auf diese Weise gelingt es, den Leitapparat 10 als eigenständige, vormontierte Baugruppe zu gestalten, die zur Endmontage des gesamten Turboladers bereit gestellt werden kann. Dabei ist sichergestellt, dass die Schaufelhebel 54 stets in korrektem Eingriff mit dem Verstellring 30 bleiben.

Es versteht sich von selbst, dass nicht sämtliche Schaufelhebel 54 mit axialen Führungsflächen 70 ausgestattet sein müssen. So kann beispielsweise ausreichend sein, auf jeder Seite lediglich zwei oder drei der Schaufelhebel 54 mit integrierten axialen Führungsflächen 70 auszustatten. Hierdurch lassen sich die Fertigungskosten des Leitapparats 10 etwas reduzieren.

Aus Kostengründen kann es auch sinnvoll sein, die axialen Führungflächen 70 nicht als intergralen Bestandteil der Schaufelhebel 54 auszuführen, sondern diese als seperate Bauteile auszuführen und nachträglich an den Schaufelhebeln 54 anzubringen, beispielsweise durch Schweißen, Nieten oder Klemmen. Dies hat den Vorteil, dass sowohl Schaufelhebel 54 als auch die axialen Führungsflächen 70 als kostengünstige Stanzteile herstellbar sind.

Eine Variante eines Leitapparats 10 ist in Fig. 10 dargestellt. Der Verstellring 30 ist wiederrum über Schaufelhebel 54 in radialer Richtung abgestützt. Der Unterschied zu den vorangegangenen Varianten besteht darin, dass die Schaufelhebel 54 axiale Ansätze 66 aufweisen, die die radiale Lagerfunktion übernehmen. Auch in diesem Falle ist eine Wälzbewegung zwischen dem Verstellring 30 und den radialen Lagerflächen der Ansätze 66 gegeben.

Das Einsparungspotential ist bei dieser Art der Anwendung noch größer, da bei herkömmlichen Leitapparaten mindestens 6 Rollen bzw. Wälzkörper erforderlich sind, um eine ausreichende radiale Abstützung des Verstellrings 30 zu erreichen.

### Bezugszeichenliste

- 1: Abgasturbolader
- 2: Gehäuse
- 3: Welle
- 4: Verdicherrad
- 5: Turbinenrad
- 6: Volute
- 7: Ringkanal
- 8: Turbinengehäuse
- 10: Leitapparat
- 12: Aktuator
- 18: Distanzhülse
- 20: Schaufellagerring
- 30: Verstellring
- 32: Ausnehmung
- 33: Ausnehmung
- 34: Umfangabschnitt
- 50: Leitschaufel
- 52: Schaufelzapfen
- 54: Schaufelhebel
- 56: Aufnahmebohrung
- 58: Hebelarm
- 60: Hebelkopf
- 62: Umfangabschnitt
- 64: radialer Ansatz
- 66: axiale Ansatz
- 68: Konturabschnitt
- 70: axiale Führungsfläche

## Patentansprüche

1. Abgasturbolader mit variabler Turbinengeometrie,
aufweisend einen Leitapparat (10) mit einem Ring von Leitschaufeln (50), die mittels Schaufelzapfen (52) an einem Schaufellagerring (20) schwenkbar gelagert sind,
wobei die Schaufelzapfen den Schaufellagerring axial durchsetzen, jeweils verdrehfest an einem Ende mit der Leitschaufel und an dem gegenüberliegenden Ende mit einen Schaufelhebel (54) verbunden sind,
und die Schaufelhebel jeweils einen Hebelarm (58) aufweisen, der radial auswärts gerichtet einen Hebelkopf (60) trägt,
wobei jeder Hebelkopf in eine korrespondierende Ausnehmung (32) eines-Verstellrings eingreift, welcher koaxial zum Schaufellagerring angeordnet und gegenüber diesem rotierbar ist,
**dadurch gekennzeichnet, dass**
der Verstellring (30) in radialer Richtung unmittelbar an den Schaufelhebeln (54) abgestützt ist, wobei der Verstellring radiale Anlageflächen aufweist, die mit korrespondierenden radialen Stützflächen (68) der Schaufelhebel zusammenwirken.

2. Abgasturbolader nach Anspruch 1,
**daduch gekennzeichnet**, dass
die radialen Anlageflächen kreisbogensegmentfömige Abschnitte der Ausnehmungen (32) sind.

3. Abgasturbolader nach Anspruch 1 oder 2,
**dadurch gekennzeichnet, dass**
die radialen Anlageflächen Umfangsabschnitte des Verstellrings (30) sind.

4. Abgasturbolader nach einem der Ansprüche 1 bis 3,
**dadurch gekennzeichnet, dass**
die radialen Stützflächen Umfangsabschnitte der Hebelköpfe (60) sind.

5. Abgasturbolader nach Anspruch 4,
**dadurch gekennzeichnet, dass**
die Hebelköpfe (60) im wesentlichen kreissegmentförmig gestaltet sind.

6. Abgasturbolader nach Anspruch 5,
**dadurch gekennzeichnet, dass**
die Hebelköpfe (60) einen Abschnitt nach Art einer Sekante aufweisen, an dem zur Ausbildung der radialen Stützfläche ein radial auswärts gerichteter kreissegmentförmiger, vorzugsweise halbkreisförmiger Ansatz angeformt oder angebracht ist.

7. Abgasturbolader nach Anspruch 1 oder 2,
**dadurch gekennzeichnet, dass**
die radialen Stützflächen an den Hebelarmen (58) angebracht oder angeformt sind.

8. Abgasturbolader nach Anspruch 7,
**dadurch gekennzeichnet, dass**
die radialen Stützflächen kreisbogensegmentförmige Konturabschnitte der Hebelarme (58) sind.

9. Abgasturbolader nach Anspruch 7,
**dadurch gekennzeichnet, dass**
die radialen Stützflächen als axiale Ansätze ausgebildet sind, die in radialer Richtung kreisbogensegmentförmige Konturabschnitte aufweisen.

10. Abgasturbolader nach einem der vorhergehenden Ansprüche,
**dadurch gekennzeichnet, dass**
axiale Führungsflächen für den Verstellring, bevorzugt an den Schaufelhebeln (54), vorgesehen sind.

11. Abgasturbolader nach Anspruch 10,
**dadurch gekennzeichnet, dass**
die axialen Führungsflächen in radialer Verlängerung der radialen Stützflächen an den Schaufelarmen angeformt sind.

12. Abgasturbolader nach Anspruch 10,
**dadurch gekennzeichnet, dass**
die axialen Führungsflächen separate Bauteile sind, die an zumindest einem der Schaufelhebel (54), bevorzugt durch Schweißen, Nieten oder Klemmen, befestigt sind.

13. Abgasturbolader nach einem der Ansprüche 10 bis 12,
**dadurch gekennzeichnet, dass**
die axialen Führungsflächen zu beiden Seiten des Verstellrings unverlierbar so angebracht sind, dass der Leitapparat einschließlich Verstellring (30) eine eigenständige, vormontierbare Baugruppe bildet.

## Claims

1. Exhaust gas turbocharger with variable turbine geometry,
comprising a guide vane system (10) with a ring of guide vanes (50) which are pivotably mounted on a vane bearing ring (20) by means of vane studs (52),
the vane studs axially penetrating the vane bearing ring and respectively being connected fixedly in terms of rotation at one end to the guide vane and at the opposing end to a vane lever (54),
and the vane levers respectively comprising a lever arm (58) which carries a lever head (60) oriented radially outwardly,
each lever head engaging in a corresponding recess (32) of an adjusting ring, which is arranged coaxially to the vane bearing ring and may be rotated relative thereto, **characterised in that** the adjusting ring (30) is supported in the radial direction directly on the vane levers (54), the adjusting ring comprising radial bearing surfaces which cooperate with corresponding radial support surfaces (68) of the vane levers.

2. Exhaust gas turbocharger according to Claim 1, **characterised in that** the radial bearing surfaces are circular-arc-segment-shaped portions of the recesses (32).

3. Exhaust gas turbocharger according to Claim 1 or 2, **characterised in that** the radial bearing surfaces are peripheral portions of the adjusting ring (30).

4. Exhaust gas turbocharger according to one of Claims 1 to 3, **characterised in that** the radial support surfaces are peripheral portions of the lever heads (60).

5. Exhaust gas turbocharger according to Claim 4, **characterised in that** the lever heads (60) are designed to be substantially circular-segment-shaped.

6. Exhaust gas turbocharger according to Claim 5, **characterised in that** the lever heads (60) comprise a portion in the manner of a secant, on which for forming the radial support surface, a radially outwardly oriented circular-segment-shaped, preferably semi-circular-shaped projection is formed or attached.

7. Exhaust gas turbocharger according to Claim 1 or 2, **characterised in that** the radial support surfaces are attached or formed on the lever arms (58).

8. Exhaust gas turbocharger according to Claim 7, **characterised in that** the radial support surfaces are circular-arc-segment-shaped contour portions of the lever arms (58).

9. Exhaust gas turbocharger according to Claim 7, **characterised in that** the radial support surfaces are configured as axial projections, which in the radial direction comprise circular-arc-segment-shaped contour portions.

10. Exhaust gas turbocharger according to one of the preceding claims, **characterised in that** axial guide surfaces are provided for the adjusting ring, preferably on the vane levers (54).

11. Exhaust gas turbocharger according to Claim 10, **characterised in that** the axial guide surfaces are formed in the radial extension of the radial support surfaces on the vane arms.

12. Exhaust gas turbocharger according to Claim 10, **characterised in that** the axial guide surfaces are separate components, which are fastened to at least one of the vane levers (54), preferably by welding, riveting or clamping.

13. Exhaust gas turbocharger according to one of Claims 10 to 12, **characterised in that** the axial guide surfaces on both sides of the adjusting ring are captively attached such that the guide vane system including the adjusting ring (30) forms a separate sub-assembly which may be preassembled.

## Revendications

1. Turbocompresseur entraîné par les gaz d'échappement, présentant une géométrie de turbine variable,
présentant un appareil de guidage (10) avec un anneau d'aubes directrices (50), montées à pivotement sur un anneau de paliers d'aubes (20), au moyen de tourillons d'aubes (52),
où les tourillons d'aubes traversent axialement l'anneau de paliers d'aubes, en étant chacune reliée, de façon assujettie en rotation, à une première extrémité, à l'aube de guidage et, à l'extrémité opposée, à un levier d'aubes (54),
et les leviers d'aubes présentant chacun un bras de levier (58) portant une tête de levier (60) orientée radialement vers l'extérieur,
où chaque tête de levier s'engage dans un évidement (32) correspondant d'une bague de réglage, disposée coaxialement par rapport à l'anneau de paliers d'aubes et susceptible de tourner par rapport à celle-ci,
**caractérisé en ce que** la bague de réglage (30) est soutenue en direction radiale, directement sur les leviers d'aubes (54), la bague de réglage présentant des surfaces d'appui radiales coopérant avec des surfaces d'appui (168) radiales correspondantes des leviers d'aubes.

2. Turbocompresseur entraîné par les gaz d'échappement selon la revendication 1, **caractérisé en ce que** les surfaces d'appui radiales sont des tronçons en forme de segments d'arc de cercle des évidements (32).

3. Turbocompresseur entraîné par les gaz d'échappement selon la revendication 1 ou 2, **caractérisé en ce que** les surfaces d'appui radiales sont des tronçons périphériques de la bague de réglage (30).

4. Turbocompresseur entraîné par les gaz d'échappement selon l'une des revendications 1 à 3, **caractérisé en ce que** les surfaces d'appui radiales sont des tronçons périphériques des têtes de levier (60).

5. Turbocompresseur entraîné par les gaz d'échappement selon la revendication 4, **caractérisé en ce que** les têtes de levier (60) sont conformées sensiblement en segments de cercle.

6. Turbocompresseur entraîné par les gaz d'échappement selon la revendication 5, **caractérisé en ce que** les têtes de levier (60) présentent un tronçon à la façon d'une sécante, sur lequel, pour réaliser la surface de soutien radiale, est formé d'un seul tenant ou monté un appendice en forme de segment de cercle, orienté radialement vers l'extérieur, de préférence ayant une forme en demi-cercle.

7. Turbocompresseur entraîné par les gaz d'échappement selon la revendication 1 ou 2, **caractérisé en ce que** les surfaces de soutien radiales sont montées ou formées d'un seul tenant sur les bras de levier (58).

8. Turbocompresseur entraîné par les gaz d'échappement selon la revendication 7, **caractérisé en ce que** les surfaces de soutien radiales sont des tronçons de contour, en forme de segments de cercle, des bras de levier (58).

9. Turbocompresseur entraîné par les gaz d'échappement selon la revendication 7, **caractérisé en ce que** les surfaces de soutien radiales sont conformées en appendices axiaux, présentant des tronçons de contour ayant une forme de segment d'arc de cercle en direction radiale.

10. Turbocompresseur entraîné par les gaz d'échappement selon l'une des revendications précédentes, **caractérisé en ce que** des faces de guidage axiales sont prévues pour la bague de réglage, de préférence sur les leviers d'aubes (54).

11. Turbocompresseur entraîné par les gaz d'échappement selon la revendication 10, **caractérisé en ce que** les faces de guidage axiales sont formées d'un seul tenant sur les bras d'aubes, dans le prolongement radial des faces de soutien radiales.

12. Turbocompresseur entraîné par les gaz d'échappement selon la revendication 10, **caractérisé en ce que** les faces de guidage axiales sont des composants séparés, fixés sur au moins l'un des leviers d'aubes (54), de préférence par soudage, rivetage ou serrage.

13. Turbocompresseur entraîné par les gaz d'échappement selon l'une des revendications 10 à 12, **caractérisé en ce que** les faces de guidage axiales sont montées de façon imperdable sur les deux côtés de la bague de réglage, de manière que l'appareil de guidage, y compris la bague de réglage (30), forme un groupe de construction prémontable, autonome.
